# EUROPEAN PATENT SPECIFICATION

(11) **EP 3 989 624 B1**
(45) Date of publication and mention of the grant of the patent: **28.01.2026**
(21) Application number: 20837030.4
(22) Date of filing: 24.06.2020
(51) Int. Cl.: H04W 72/044, H04W 16/18, H04W 24/02, H04L 5/00

(54) **RESOURCE ALLOCATION METHOD AND DEVICE FOR INTELLIGENT SPACE-DIVIDED CELL CLUSTER, APPARATUS AND STORAGE MEDIUM**
RESSOURCENZUWEISUNGSVERFAHREN, -EINRICHTUNG UND -VORRICHTUNG FÜR INTELLIGENTEN RAUMGETEILTEN ZELLCLUSTER UND SPEICHERMEDIUM
PROCÉDÉ, APPAREIL ET DISPOSITIF D'ATTRIBUTION DE RESSOURCES POUR GROUPE DE CELLULES INTELLIGENT À RÉPARTITION SPATIALE, ET SUPPORT DE STOCKAGE

(30) Priority: 11.07.2019 CN 201910626576
(43) Date of publication of application: 27.04.2022
(73) Proprietor: ZTE Corporation, Shenzhen, Guangdong 518057 (CN)
(72) Inventor: LUO, Zequn, Shenzhen, Guangdong 518057 (CN); ZENG, Zhaohua, Shenzhen, Guangdong 518057 (CN); LIU, Qiaoyan, Shenzhen, Guangdong 518057 (CN); WANG, Guoyan, Shenzhen, Guangdong 518057 (CN)
(74) Representative: Canzler & Bergmeier Patentanwälte Partnerschaft mbB
(86) International application number: PCT/CN2020/098086
(87) International publication number: WO 2021/004287

(56) References cited:
- EP-A1- 3 295 585
- WO-A1-2018/210129
- CN-A- 102 098 736
- CN-A- 102 457 853
- CN-A- 102 487 532
- CN-A- 106 028 371
- CN-A- 108 880 641
- CN-B- 101 668 295
- US-A1- 2016 270 073

## Description

### TECHNICAL FIELD

The present disclosure relates to, but is not limited to, the field of communications.

### BACKGROUND

With the continuous progress of radio technology, various radio services are greatly emerged, while spectrum resources for the radio services are limited. In the face of the continuous increase of bandwidth requirements of customers, the conventional spectrum resources from 300MHz to 3GHz mainly used by commercial communication are very tight, and cannot meet the requirements of future wireless communication.

In the future wireless communication, a carrier frequency higher than that used in the fourth generation (4G) communication system, such as 28GHz, 45GHz and 70GHz, will be used for communication. However, those high-frequency channels have the disadvantages of large free propagation loss, easy absorption by oxygen and high susceptibility to rain attenuation, which seriously affects coverage performance of a high-frequency communication system. However, since the carrier frequency corresponding to high-frequency communication has a shorter wavelength, more antenna elements can be accommodated in a unit area, which allows adopting a beamforming method to increase an antenna gain, thereby ensuring the coverage performance of the high-frequency communication. On the other hand, the authorized frequency spectra (e.g., from 300MHz to 3GHz) can be highly effectively used by the Massive Multiple-Input and Multiple-Output (Massive MIMO) technology. Since the Massive MIMO technology realizes independence or orthogonality among multi-user channels to a certain extent, a plurality of users can be subjected to space division of a same time-frequency domain resource, thereby greatly improving spectral efficiency and realizing efficient utilization of the frequency spectra. Therefore, the Massive MIMO technology has become the key technology for enhancement of high-frequency communication coverage and development of spatial freedom.

In the existing technology, an effective Massive MIMO method is to generate a plurality of beams in different directions through multiple antennas, and divide cells covered by a base station into a plurality of divided cells (also called sub-cells or split cells), which are called an intelligent space-divided cell cluster (hereinafter referred to as a space-divided cell cluster), each divided cell in the space-divided cell cluster multiplexes a same time-frequency resource and is independently scheduled, so as to achieve space division multiplexing, and the maximum multiple of space division multiplexing is equal to the number of the divided cells. However, with such Massive MIMO method, the divided cells are interfered by each other, and users in each divided cell are interfered by the other divided cells to different degrees. Therefore, how to avoid the interference as much as possible, improve the link spectral efficiency and maximize throughput of the whole cell cluster in frequency-domain resource allocation to the users by each divided cell has become a technical problem to be urgently solved in the solution of the intelligent space-divided cell cluster. Chinese patent publication No. CN 101668295 B provides a resource reuse method and system for supporting cooperative transmission in communication system, and the method and system can effectively inhibit interference among the sub-cells, and enhance the marginal use performance of the sub-cells. International patent application publication No. WO 2018/210129 A1 provides a resource allocation method and device in a wireless mobile communication system, relating to the field of wireless mobile communications. U.S. patent application publication No. 2016/0270073 A1 discloses a method and apparatus for resource allocation in a wireless communication system.

### SUMMARY

The features of the resource allocation method for an intelligent space-divided cell cluster, apparatus as well as the storage medium according to the present invention are defined in the independent claims, and the preferable features according to the present invention are defined in the dependent claims. In one aspect, an embodiment of the present disclosure provides a resource allocation method for an intelligent space-divided cell cluster, including: for each divided cell in a space-divided cell cluster, determining users belonging to each cell combination of the divided cell, with the cell combinations of the divided cell including a non-collision combination and collision combinations, the collision combinations including various combinations of the divided cell and the other divided cells in the space-divided cell cluster, and the non-collision combination including the divided cell alone; obtaining an estimated total number of required resource blocks of the space-divided cell cluster according to an estimated number of required resource blocks of the users belonging to each cell combination of each divided cell; and allocating resource blocks to the users in each cell combination of the divided cells in the space-divided cell cluster according to the number of available resource blocks of each divided cell and the estimated total number of required resource blocks of the space-divided cell cluster, wherein the intelligent space-divided cell cluster are cells covered by a base station and divided into a plurality of divided cells using massive Multiple-Input and Multiple-Output, MIMO, and wherein each divided cell in the space-divided cell cluster multiplexes a same time-frequency resource and is independently scheduled.

In another aspect, an embodiment of the present disclosure, not claimed, further provides a resource allocation device for an intelligent space-divided cell cluster, including: a user determination module configured to determine, for each divided cell in a space-divided cell cluster, users belonging to each cell combination of the divided cell, with the cell combinations of the divided cell including a non-collision combination and collision combinations, the collision combinations including various combinations of the divided cell and the other divided cells in the space-divided cell cluster, and the non-collision combination including the divided cell alone; and an allocation control module configured to obtain an estimated total number of required resource blocks of the space-divided cell cluster according to an estimated number of required resource blocks of the users belonging to each cell combination of each divided cell, and allocate resource blocks to the users in each cell combination of the divided cells in the space-divided cell cluster according to the number of available resource blocks of each divided cell and the estimated total number of required resource blocks of the space-divided cell cluster.

In still another aspect, an embodiment of the present disclosure further provides a communication apparatus, including a processor, a memory and a communication bus; the communication bus is configured to connect the processor with the memory; and the processor is configured to execute a computer program stored in the memory to perform the operations of the resource allocation method for an intelligent space-divided cell cluster described herein.

In yet another aspect, an embodiment of the present disclosure further provides a computer-readable storage medium having one or more computer programs stored thereon, and the one or more computer programs are executable by one or more processors to perform the operations of the resource allocation method for an intelligent space-divided cell cluster described herein.

### BRIEF DESCRIPTION OF DRAWINGS

FIG. 1 is a flowchart illustrating a resource allocation method for an intelligent space-divided cell cluster according to Embodiment One of the present disclosure;
FIG. 2 is a schematic diagram of a process of determining users belonging to each cell combination according to the Embodiment One of the present disclosure;
FIG. 3 is a schematic diagram of a resource allocation process according to the Embodiment One of the present disclosure;
FIG. 4 is a schematic diagram of a resource allocation process according to Embodiment Two of the present disclosure;
FIG. 5 is a schematic structural diagram of a resource allocation device for an intelligent space-divided cell cluster according to Embodiment Three of the present disclosure;
FIG. 6 is a schematic diagram of a resource allocation method in Application Scenario One according to Embodiment Four of the present disclosure;
FIG. 7 is a schematic diagram of a resource allocation method in Application Scenario Two according to the Embodiment Four of the present disclosure; and
FIG. 8 is a schematic structural diagram of a communication apparatus according to Embodiment Five of the present disclosure.

### DETAIL DESCRIPTION OF EMBODIMENTS

In order to make the objectives, technical solutions and advantages of the present disclosure clearer, the embodiments of the present disclosure are further described in detail below in conjunction with the specific implementations and accompanying drawings. It should be understood that the specific embodiments described herein are merely intended to explain the present disclosure, rather than limiting the present disclosure. In addition, the embodiments and the features thereof in the present disclosure can be arbitrarily combined with one another if no conflict is incurred.

### Embodiment One

The embodiment provides a resource allocation method for an intelligent space-divided cell cluster, including, for each divided cell in a space-divided cell cluster, first determining users belonging to each cell combination of the divided cell; then obtaining an estimated total number of required resource blocks of the space-divided cell cluster according to an estimated number of required resource blocks of the users belonging to each cell combination of each divided cell; and finally allocating resource blocks to the users in each cell combination of the divided cells in the space-divided cell cluster according to the number of available resource blocks of each divided cell and the estimated total number of required resource blocks of the space-divided cell cluster. With the method, the interference can be avoided as much as possible, which facilitates an improvement to the link spectral efficiency, so that the throughput of the whole cell cluster can be maximized as much as possible. For convenience of understanding, the divided cell in the space-divided cell cluster and the cell combination of the divided cell in the embodiment are illustrated below by an example.

In the example, it is assumed that cells covered by a base station are divided into 4 divided cells, namely Cell1, Cell2, Cell3 and Cell4, to form a space-divided cell cluster. For the divided cell Cell1, cell combinations of Cell1 include: (Cell1), (Cell1, Cell4), (Cell1, Cell2), (Cell1, Cell3), (Cell1, Cell2, Cell3), (Cell1, Cell2, Cell4), (Cell1, Cell3, Cell4), and (Cell1, Cell2, Cell3, and Cell4). Among the eight cell combinations of the divided cell Cell1, (Cell1) is a non-collision combination including the divided cell Cell1 alone (i.e., Cell1 does not multiplex resources with the other divided cells), and the other seven cell combinations of the divided cell Cell1 and the other three divided cells all involve collision with the other divided cells (i.e., Cell1 multiplexes resources with the other divided cells), and are referred to as collision combinations of the divided cell Cell1 in the embodiment.

The cell combinations of the divided cells Cell2, Cell3 and Cell4 in the space-divided cell cluster may be determined in a similar way to that of the divided cell Cell1, and are not described again. It should be understood that, when the cells covered by the base station are divided to obtain the divided cells, the specific division method adopted and the number of the divided cells obtained may be flexibly set according to a specific application scenario, and are not limited by the embodiment.

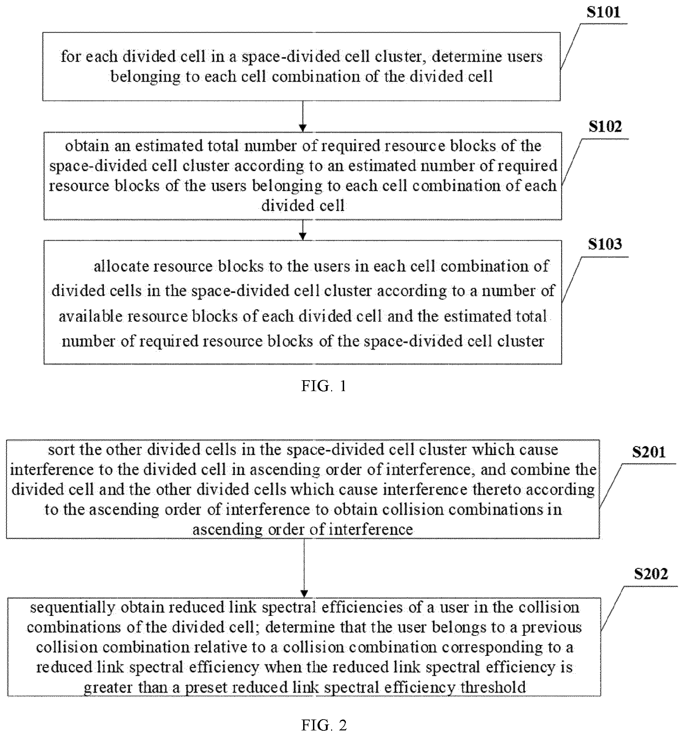

For convenience of understanding, the resource allocation method for an intelligent space-divided cell cluster provided in the embodiment is described below with reference to the drawings. Referring to FIG. 1, the method may include operations S101 to S103.

In the operation S101, for each divided cell in a space-divided cell cluster, users belonging to each cell combination of the divided cell are determined.

In an example of the embodiment, determining the users belonging to each cell combination of the divided cell may include, but is not limited to, determining the users belonging to each cell combination of the divided cell according to an ascending order of interference of each cell combination of the divided cell to the divided cell.

For example, for the divided cell Cell1, assuming that an ascending order of interference of Cell2, Cell3 and Cell4 in the space-divided cell cluster to Cell1 is an order of Cell2, Cell3 and Cell4, the ascending order of the interference of each cell combination of the divided cell Cell1 to the divided cell Cell1 is an order of (Cell1), (Cell1, Cell2), (Cell1, Cell3), (Cell1, Cell4), (Cell1, Cell2, Cell3), (Cell1, Cell2, Cell4), (Cell1, Cell3, Cell4), and (Cell1, Cell2, Cell3, Cell4); and the users belonging to each cell combination of the divided cell Cell1 are determined according to the above order of the combinations.

In an example of the embodiment, determining the users belonging to each cell combination of the divided cell according to the ascending order of the interference of each cell combination of the divided cell to the divided cell may include, but is not limited to, operations S201 and S202, as shown in FIG. 2.

In the operation S201, the other divided cells in the space-divided cell cluster which cause interference to the divided cell are sorted in ascending order of interference, and the divided cell and the other divided cells which cause interference thereto are combined according to the ascending order of interference to obtain collision combinations in ascending order of interference.

For example, for the divided cell Cell1, the other divided cells which cause interference to the divided cell Cell1 are sorted in an order of Cell2, Cell3 and Cell4 according to the ascending order of interference; and then the divided cell and the other divided cells which cause interference thereto are combined according to the ascending order of interference to obtain collision combinations in ascending order of interference: (Cell1, Cell2), (Cell1, Cell3), (Cell1, Cell4), (Cell1, Cell2, Cell3), (Cell1, Cell2, Cell4), (Cell1, Cell3, Cell4), (Cell1, Cell2, Cell3, Cell4).

In the operation S202, reduced link spectral efficiencies of a user in the collision combinations of the divided cell are sequentially obtained; when a reduced link spectral efficiency is greater than a preset reduced link spectral efficiency threshold, it is determined that the user belongs to a previous collision combination relative to the collision combination corresponding to the reduced link spectral efficiency; and when the collision combination corresponding to the reduced link spectral efficiency is the first collision combination, it is determined that the user belongs to a non-collision combination of the divided cell, and at this time, the user is a user that does not support the collision combination.

It should be understood that, in the embodiment, the reduced link spectral efficiency thresholds set for different users or different divided cells may be the same, or may be flexibly set to be different according to specific requirements. A specific value of the reduced link spectral efficiency threshold may also be set according to the requirements.

In the embodiment, the reduced link spectral efficiency in the example is a difference between a link spectral efficiency of the user in the divided cell without interference and a link spectral efficiency of the user in a collision combination corresponding to the divided cell. For example, for a reduced link spectral efficiency of a user in the collision combination (Cell1, Cell2) of the divided cell Cell1, a link spectral efficiency 0 of the user without interference is calculated first, a link spectral efficiency 1 of the user in the collision combination (Cell1, Cell2) is then calculated, and a reduced link spectral efficiency 01 of the user in the collision combination (Cell1, Cell2) is obtained through subtraction of the obtained two efficiencies. The obtained reduced link spectral efficiency 01 is compared with a reduced link spectral efficiency threshold. If the reduced link spectral efficiency 01 is greater than or equal to the reduced link spectral efficiency threshold, it is determined that the user belongs to the non-collision combination (Cell1) of the divided cell Cell1; and if the reduced link spectral efficiency 01 is less than the reduced link spectral efficiency threshold, a link spectral efficiency 2 of the user in the collision combination (Cell1, Cell3) of Cell1 may be calculated, a reduced link spectral efficiency 12 is obtained through subtraction of the link spectral efficiency 2 and the link spectral efficiency 1. If the reduced link spectral efficiency 12 is larger than or equal to the reduced link spectral efficiency threshold, it is determined that the user belongs to the collision combination (Cell1, Cell2) of Cell1; otherwise, a link spectral efficiency 3 of the user in (Cell1, Cell3) is calculated, and so on, until a reduced link spectral efficiency greater than or equal to the reduced link spectral efficiency threshold is obtained, or calculation of the last collision combination (Cell1, Cell2, Cell3 and Cell4) is completed. The users belonging to each cell combination of each divided cell may be obtained through the above processes.

Referring to FIG. 1 again, in the operation S102, an estimated total number of required resource blocks of the space-divided cell cluster is obtained according to an estimated number of required resource blocks of the users belonging to each cell combination of each divided cell.

In the embodiment, the estimated number of required resource blocks of each user can be obtained, and a specific method of estimating and calculating the number of required resource blocks may be flexibly set, and is not limited in the embodiment.

In the embodiment, a sum of the estimated numbers of required resource blocks of all the users in each cell combination of the divided cell may be obtained first, then the sums of the numbers of required resource blocks of all the cell combinations are added to obtain an estimated total number of required resource blocks of all the users in the divided cell, and then the estimated total numbers of required resource blocks of all the users in all the divided cells are added to obtain the estimated total number of required resource blocks of the space-divided cell cluster.

In the operation S103, resource blocks are allocated to the users in each cell combination of the divided cells in the space-divided cell cluster according to the number of available resource blocks of each divided cell and the estimated total number of required resource blocks of the space-divided cell cluster.

For example, when the estimated total number of required resource blocks of the space-divided cell cluster is less than or equal to a minimum of the numbers of available resource blocks of the divided cells, the resource blocks are sequentially allocated to the divided cells according to identifiers (IDs) of the divided cells, and the resource blocks are allocated to the users in each divided cell.

As another example, when the estimated total number of required resource blocks of the space-divided cell cluster is greater than the minimum of the numbers of available resource blocks of the divided cells, the resource blocks are allocated to the divided cell in each cell combination according to a descending order of layer numbers of the cell combinations.

The layer number of a cell combination is the number of divided cells included in the cell combination, and the layer number of a non-collision combination of a divided cell is 1. For example, for the cell combinations of the divided cell Cell1: (Cell1), (Cell1, Cell2), (Cell1, Cell3), (Cell1, Cell4), (Cell1, Cell2, Cell3), (Cell1, Cell2, Cell4), (Cell1, Cell3, Cell4), and (Cell1, Cell2, Cell3, and Cell4), their respective layer numbers are: 1, 2, 2, 2, 3, 3, 3 and 4.

In the embodiment, a random sorting manner may be adopted for the cell combinations with the same layer number.

Alternatively, for further improving the link spectral efficiency, the sorting may be performed according to the following sorting rule: sorting the cell combinations in descending order of layer number, sorting the cell combinations with the same layer number in ascending order of link spectral efficiency average of cell combination (an average of the spectral efficiencies of all the users in the cell combination may be used as the link spectral efficiency average), and sorting the cell combinations with the same layer number and the same link spectral efficiency average in descending order of maximum difference of total number of required resource blocks of the divided cells in the cell combinations (the numbers of required resource blocks of all the divided cells in the cell combination may be subjected to subtraction to obtain differences, and a cell combination having a maximum of the obtained differences is selected; and for the non-collision combination, the number of required resource blocks of the corresponding divided cell is directly taken as the maximum difference of total number of required resource blocks).

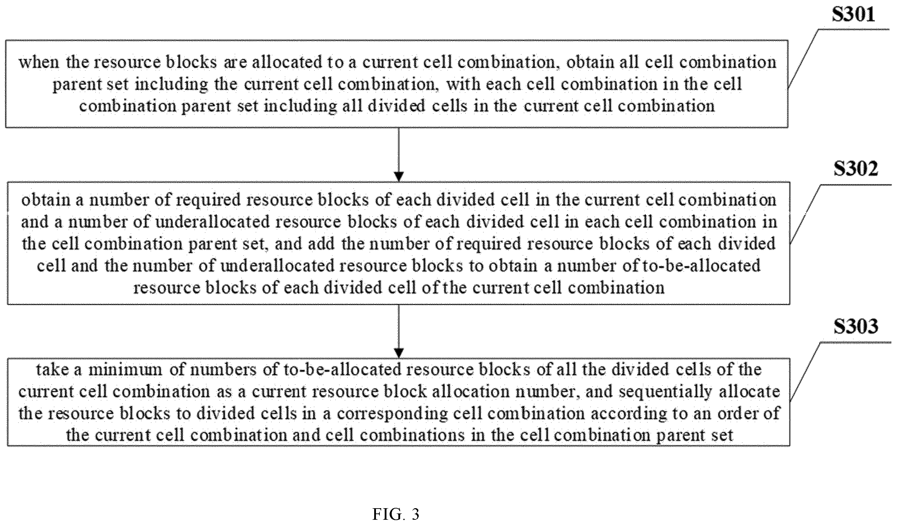

After the above sorting, the resource blocks may be sequentially allocated to the divided cells in each cell combination according to the order of the cell combinations. For example, with reference to FIG. 3, an exemplary allocation process may include operations S301 to S303.

In the operation S301, when the resource blocks are allocated to a current cell combination, all cell combination parent set including the cell combination are obtained, and each cell combination in the cell combination parent set includes all the divided cells in the current cell combination.

For example, for the collision combination (Cell1, Cell2, Cell3, Cell4) of the divided cell Cell1, there is no cell combination parent set including the cell combination; for the collision combination (Cell1, Cell3, Cell4) of the divided cell Cell1, the cell combination parent set including the cell combination is (Cell1, Cell2, Cell3, Cell4); for the collision combination (Cell1, Cell3) of the divided cell Cell, all the cell combination parent sets including the cell combination are (Cell1, Cell3, Cell4) and (Cell1, Cell2, Cell3, Cell4); and for the non-collision combination (Cell1) of the divided cell Cell1, all the cell combination parent sets including the cell combination are (Cell1), (Cell1, Cell2), (Cell1, Cell3), (Cell1, Cell4), (Cell1, Cell2, Cell3), (Cell1, Cell2, Cell4), (Cell1, Cell3, Cell4) and (Cell1, Cell2, Cell3, Cell4).

In the operation S302, the number of required resource blocks of each divided cell in the current cell combination and the number of underallocated resource blocks of each divided cell in each cell combination in the cell combination parent set are obtained, and the number of required resource blocks of each divided cell and the number of underallocated resource blocks are added to obtain the number of to-be-allocated resource blocks of each divided cell of the current cell combination.

In the embodiment, the number of underallocated resource blocks of each divided cell in each cell combination in the cell combination parent set corresponds to a case where a part of the divided cells in the cell combination in the cell combination parent set are not allocated with enough resource blocks when resource allocation is performed to the cell combination in the cell combination parent set. For example, assuming that the current cell combination is (Cell1, Cell3, Cell4), and the numbers of required resource blocks of the divided cells Cell1, Cell3 and Cell4 in the cell combination are (k1, k3, k4); the cell combination parent set of the cell combination is (Cell1, Cell2, Cell3, Cell4), assuming that the numbers of underallocated resource blocks corresponding to the divided cells Cell1, Cell2, Cell3 and Cell4 in the cell combination parent set are (0, 0, 3, 0); then the numbers of to-be-allocated resource blocks of the divided cells of the cell combination (Cell1, Cell3, Cell4) are (k1, k3+3, k4). The ways of determining the numbers of to-be-allocated resource blocks of the other cell combinations are similar to the above, and thus will not be described here.

In the operation S303, a minimum of the numbers of to-be-allocated resource blocks of all the divided cells of the current cell combination is taken as a current resource block allocation number, and the resource blocks are sequentially allocated to the divided cells in a corresponding cell combination according to an order of the current cell combination and the cell combinations in the cell combination parent set.

For example, the minimum of the numbers of to-be-allocated resource blocks (k1, k3+3, k4) (assumed to be k1, and k1 is greater than or equal to3 (certainly, the value of k1 may also be less than3)) is selected as the current resource block allocation number. In the allocation, three resource blocks are allocated to Cell3 in the cell combination parent set (Cell1, Cell2, Cell3, Cell4) of the cell combination (Cell1, Cell3, Cell4), and then k1, k1-3 and k1 resource blocks are allocated to the divided cells in the cell combination (Cell1, Cell3, Cell4) respectively. After the allocation is finished, the numbers of underallocated resource blocks of the corresponding divided cells in (Cell1, Cell3, Cell4) and the corresponding cell combination parent set are updated accordingly.

In the embodiment, after allocating the resource blocks to the divided cells in each cell combination according to a descending order of the layer numbers of the cell combinations, the method may further include: when a divided cell is determined to be a resource surplus divided cell with extra available resource blocks, selecting at least one target collision combination from collision combinations of the resource surplus divided cell, separating the resource surplus divided cell from the selected target collision combination, and allocating resource blocks to the divided cell according to the number of extra available resource blocks of the resource surplus divided cell.

It should be understood that, in the embodiment, the way of selecting the at least one target collision combination from the collision combinations of the resource surplus divided cell may be flexibly set, such as a random selection way. For further improving the link spectral efficiency, the at least one target collision combination may be selected in, but not limited to, the following way: selecting at least one collision combination from the collision combinations of the resource surplus divided cell according to the number of extra available resource blocks of the resource surplus divided cell and a descending order of reduced link spectral efficiencies of the collision combinations.

It can be seen that, by using the resource allocation method for an intelligent space-divided cell cluster provided by the embodiment to allocate the resource blocks to the users in each cell combination of the divided cells in the space-divided cell cluster, the interference can be avoided, which facilitates an improvement to the link spectral efficiency, so that the throughput of the whole cell cluster can be maximized as much as possible.

### Embodiment Two

For convenience of understanding, based on the above embodiment, a specific application scenario is taken as an example to describe the resource allocation method for an intelligent space-divided cell cluster in the present embodiment.

As can be seen from the above analysis, the resource allocation method provided by the embodiment classifies different users, sorts the different users into different cell combinations of the divided cells, and allocates resources in the unit of cell combination by taking the layer numbers of the cell combinations (also referred to as the number of space division layers) and the spectral efficiencies as priority criteria. The method can also ensure dynamical adjustment of the layer numbers of the cell combinations with traffic of the cells of the base station.

In the embodiment, for the divided cells in the space-divided cell cluster, the following information may be obtained: the divided cell in the space-divided cell cluster which allows for collision with each divided cell; an estimated resource demand of each divided cell, that is, the number of required resource blocks; a link spectral efficiency average of each divided cell under the condition of no interference; and a reduced link spectral efficiency average of each divided cell in each collision combination.

Assuming that the cells covered by the base station are divided into N divided cells, an exemplary acquisition method of the above information is as follows:
for all the users in the cell cluster, estimating the number of resources to be allocated of each user, that is, estimating the number of required resource blocks of each user;
calculating a link spectral efficiency (the unit is bit/s/Hz or (bit/s)/Hz) of each user under the condition of no interference from an adjacent cell (that is, another divided cell);
for each divided cell, sorting the other divided cells in the space-divided cell cluster in ascending order of interference, and then obtaining each cell combination of the divided cell according to the ascending order of interference;
for each user, traversing a reduced link spectral efficiency of the user in each corresponding cell combination, and determining to which cell combination the user belongs according to the obtained reduced link spectral efficiencies; and
adding the estimated resource numbers of the users belonging to one cell combination together, averaging the link spectral efficiencies of the users,
averaging the reduced link spectral efficiencies of the users, and obtaining a collision pattern of all the divided cells. For example, when N is 4, Table 1 below shows a collision pattern such obtained. In Table 1, RB_{i,j} is an estimated resource number (that is, the total number of required resource blocks) of the j^{th} divided cell in the i^{th} cell combination, SE_{i,j} is a link spectral efficiency of the j^{th} divided cell in the i^{th} cell combination, and ΔSE_{i,j} is a reduced link spectral efficiency of the j^{th} divided cell in the i^{th} cell combination.

**Table 1**

| **ID of Divided Cell in Cell Combination** | **Cell1** | **Cell2** | **Cell3** | **Cell4** |
|---|---|---|---|---|
| **{Cell1,Cell2, Cell3,Cell4}** | **RB1,1, SE1,1, ΔSE1,1** | **RB1,2, SE1,2, ΔSE1,2** | **RB1,3, SE1,3, ΔSE1,3** | **RB1,4, SE1,4, ΔSE1,4** |
| **{Cell1,Cell2,Cell3}** | **RB2,1, SE2,1, ΔSE2,1** | **RB2,2, SE2,2, ΔSE2,2** | **RB2,3, SE2,3, ΔSE2,3** | **0** |
| **{Cell1,Cell2,Cell4}** | **RB3,1, SE3,1, ΔSE3,1** | **RB3,2, SE3,2, ΔSE3,2** | **0** | **RB3,4, SE3,4, ΔSE3,4** |
| **{Cell2,Cell3,Cell4}** | **0** | **RB4,2, SE4,2, ΔSE4,2** | **RB4,3, SE4,3, ΔSE4,3** | **RB4,4, SE4,4, ΔSE4,4** |
| **{Cell1,Cell3,Cell4}** | **RB5,1, SE5,1, ΔSE5,1** | **0** | **RB5,3, SE5,3, ΔSE5,3** | **RB5,4, SE5,4, ΔSE5,4** |
| **{Cell1,Cell2}** | **RB6,1, SE6,1, ΔSE6,1** | **RB6,2, SE6,2, ΔSE6,2** | **0** | **0** |
| **{Cell1,Cell3}** | **RB7,1, SE7,1, ΔSE7,1** | **0** | **RB7,3, SE7,3, ΔSE7,3** | **0** |
| **{Cell1,Cell4}** | **RB8,1, SE8,1, ΔSES,1** | **0** | **0** | **RB8,4, SE8,4, ΔSE8,4** |
| **{Cell2,Cell3}** | **0** | **RB9,2, SE9,2, ΔSE9,2** | **RB9,3, SE9,3, ΔSE9,3** | **0** |
| **{Cell2,Cell4}** | **0** | **RB10,2, SE10,2, ΔSE10,2** | **0** | **RB10,4, SE10,4, ΔSE10,4** |
| **{Cell3,Cell4}** | **0** | **0** | **RB11,3, SE11,3, ΔSE11,3** | **RB11,4, SE11,4, ΔSE11,4** |
| **{Celll}** | **RB12,1, SE12,1, ΔSE12,1 (equal to 0)** | **0** | **0** | **0** |
| **{Cell2}** | **0** | **RB13,2, SE13,2, ΔSE13,2** | **0** | **0** |
| **{Cell3}** | **0** | **0** | **RB14,3, SE14,3, ΔSE14,3** | **0** |
| **{Cell4}** | **0** | **0** | **0** | **RB15,4, SE15,4, ΔSE15,4** |

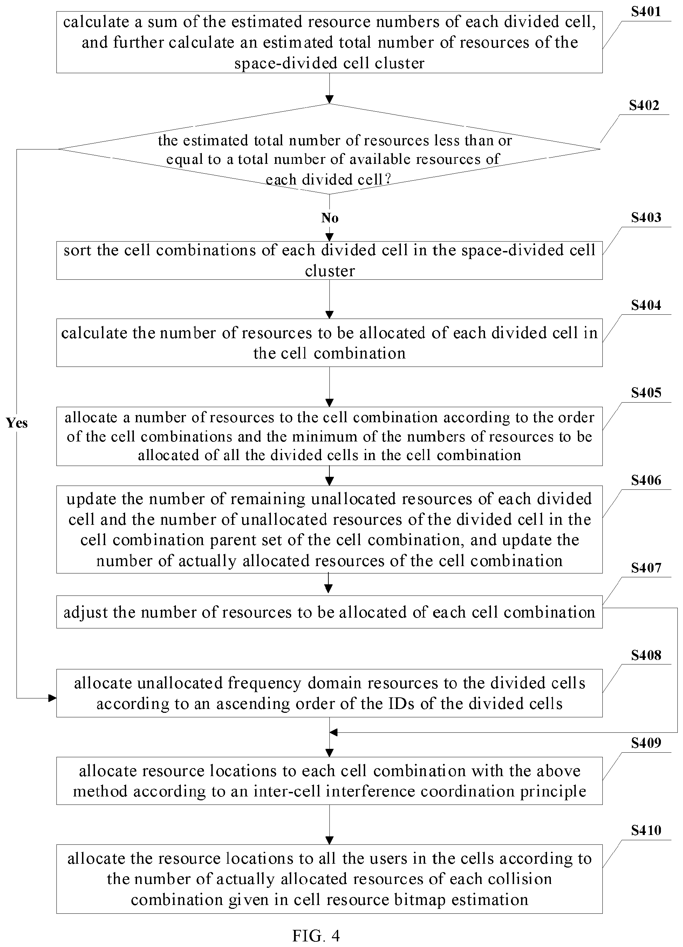

Based on the above collision pattern, a resource allocation process as shown in FIG. 4 may include operations S401 to S410.

In the operation S401, a sum of the estimated resource numbers of each divided cell is calculated, and an estimated total number of resources of the space-divided cell cluster (i.e., the estimated total number of required resource blocks of the space-divided cell cluster) is further calculated.

In the operation S402, if the estimated total number of resources of the space-divided cell cluster is less than or equal to a total number of available resources of each divided cell, which indicates that all the divided cells have no resource collision, the operation S408 is then performed; otherwise, the S403 is then performed.

In the operation S403, the cell combinations in Table 1 are sorted in descending order of layer number, the cell combinations with the same layer number are sorted in ascending order of link spectral efficiency average of cell combination, and the cell combinations with the same layer number and the same link spectral efficiency average are sorted in descending order of maximum difference of total number of required resource blocks of the divided cells in the cell combinations.

This operation may include: calculating differences between the estimated resource numbers of the divided cells in each collision combination; calculating the link spectral efficiency average of each collision combination; and sorting the cell combinations in Table 1 according to the descending order of the layer numbers of the cell combinations, the descending order of the link spectral efficiency averages and the descending order of the differences between the estimated resource numbers.

In the operation S404, when resources are allocated to each cell combination, the number of required resource blocks of each divided cell in the cell combination is calculated, and a cell combination parent set including the cell combination is found. If a divided cell in the cell combination has an unallocated resource block in the cell combination parent set of the cell combination, a sum of the number of required resource blocks of the cell combination and the number of unallocated resource blocks of the divided cell in the cell combination parent set of the cell combination is recorded as the number of resources to be allocated of the cell combination.

In the operation S405, the number of actually allocated resources of each cell combination is a minimum of the numbers of resources to be allocated of all the divided cells in the cell combination, and a number of resources are allocated to the cell combination according to the above order of the cell combinations. If a cell combination has a plurality of cell combination parent sets, the resources are allocated according to an updated order of the plurality of cell combination parent sets.

In the operation S406, the number of remaining unallocated resources of each divided cell in each cell combination and the number of unallocated resources of the divided cell in the cell combination parent set of the cell combination are updated, and the number of actually allocated resources of the cell combination is updated.

In each cell combination, an actual link spectral efficiency of each divided cell in each cell combination may be calculated by weighting the numbers of allocated resources of the divided cell in the cell combination and in the cell combination parent set of the cell combination. An actual reduced link spectral efficiency of each divided cell in each cell combination can be also calculated with the same method of weighting the numbers of allocated resources.

In the operation S407, the number of resources to be allocated of each cell combination is adjusted: for each divided cell, a total required bandwidth (i.e., the total number of required resource blocks (e.g., a sum of RB_{i,j} in all the columns in Table 1) is calculated; and when the total required bandwidth of the divided cell is less than the total number of available resources of each divided cell, the collision combinations with higher actual link spectral efficiencies are preferentially split in this embodiment, estimated resources are separated from those collision combinations for frequency division scheduling, and the information of the corresponding combinations is updated.

In the operation S408, unallocated frequency domain resources are allocated to the divided cells according to an ascending order of the IDs of the divided cells.

In the operation S409, resource locations are allocated to each cell combination with the above method according to an inter-cell interference coordination principle.

In the operation S410, the resource locations are allocated to all the users in the cells according to the number of actually allocated resources of each collision combination given in cell resource bitmap estimation, with a descending order of link spectral efficiencies taken as a resource allocation principle.

### Embodiment Three

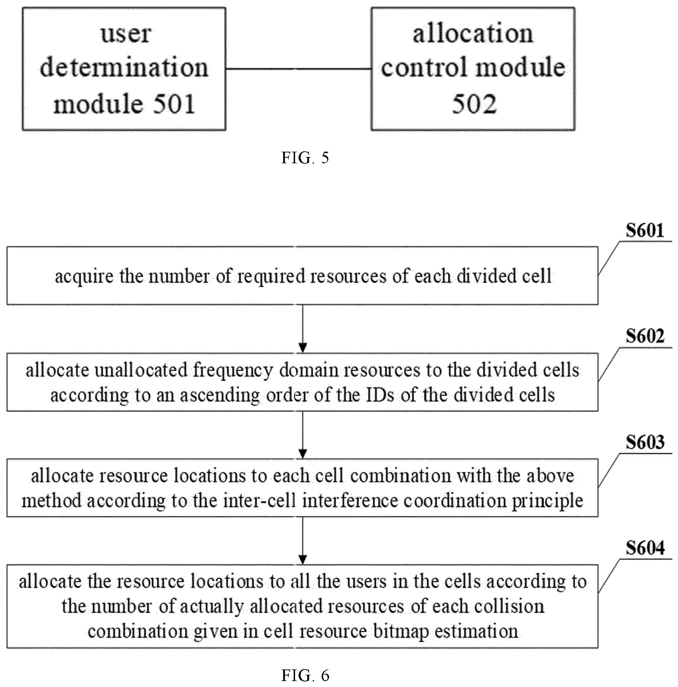

The embodiment further provides a resource allocation device for an intelligent space-divided cell cluster, which can be disposed in various communication apparatus (for example, but not limited to, a base station). With reference to FIG. 5, the device includes a user determination module 501 and an allocation control module 502.

The user determination module 501 is configured to determine, for each divided cell in a space-divided cell cluster, users belonging to each cell combination of the divided cell according to an ascending order of interference of each cell combination of the divided cell to the divided cell; and the cell combinations include a non-collision combination including the divided cell alone and various collision combinations of the divided cell and the other divided cells in the space-divided cell cluster. Reference may be made to the above embodiments for a process of performing the above operations by the user determination module 501, and the process is not described here. It should be understood that the above functions of the user determination module 501 may be implemented by, but not limited to, a processor or a controller of a communication apparatus where the resource allocation device is located.

The allocation control module 502 is configured to obtain an estimated total number of required resource blocks of the space-divided cell cluster according to an estimated number of required resource blocks of the users belonging to each cell combination of each divided cell, and allocate resource blocks to the users in each cell combination of the divided cells in the space-divided cell cluster according to the number of available resource blocks of each divided cell and the estimated total number of required resource blocks of the space-divided cell cluster. Reference may be made to the above embodiments for a process of performing the above operations by the allocation control module 502, and the process is not described here. It should be understood that the above functions of the allocation control module 502 may be implemented by, but not limited to, a processor or a controller of the communication apparatus where the resource allocation device is located

### Embodiment Four

For convenience of understanding, further description is given below in the embodiment by taking two specific application scenarios as examples. Application Scenario One
In this application scenario, assuming that the number N of the divided cells in the space-divided cell cluster satisfies N=4 and the number of available resource blocks N_{RB} of each divided cell satisfies N_{RB} =100, a collision pattern obtained based on such assumption is shown in Table 2:

**Table 2**

| **ID of Divided Cell in Cell Combination** | **Cell1** | **Cell2** | **Cell3** | **Cell4** |
|---|---|---|---|---|
| **{Cell1,Cell2,Cell3, Cell4}** | **RB1,1=2** | **RB1,2=2** | **RB1,3=2** | **RB1,4=2** |
| | **SE1,1=3.85** | **SE1,2=3.32** | **SE1,3=1.04** | **SE1,4=1.16** |
| | **ΔSE1,1=2.2** | **ΔSE1,2=1.63** | **ΔSE1,3=0.46** | **ΔSE1,4=0.65** |
| **{Cell1,Cell2,Cell3}** | **RB2,1=2** | **RB2,2=2** | **RB2,3=2** | **0** |
| | **SE2,1=4.14** | **SE2,2=0.83** | **SE2,3=3.32** | |
| | **ΔSE2,1=2.34** | **ΔSE2,2=0.28** | **ΔSE2,3=1.43** | |
| **{Cell1,Cell2,Cell4}** | **RB3,1=2** | **RB3,2=2** | **0** | **RB3,4=2** |
| | **SE3,1=1.94** | **SE3,2=3.99** | | **SE3,4=2.01** |
| | **ΔSE3,1=0.9** | **ΔSE3,2=0.84** | | **ΔSE3,4=0.94** |
| **{Cell2,Cell3,Cell4}** | **0** | **RB4,2=2** | **RB4,3=2** | **RB4,4=2** |
| | | **SE4,2=1.04** | **SE4,3=2.01** | **SE4,4=0.25** |
| | | **ΔSE4,2=0.14** | **ΔSE4,3=0.78** | **ΔSE4,4=0.11** |
| **{Cell1,Cell3,Cell4}** | **RB5,1=2** | **0** | **RB5,3=2** | **RB5,4=2** |
| | **SE5,1=0.48** | | **SE5,3=1.94** | **SE5,4=0.25** |
| | **ΔSE5,1=0.19** | | **ΔSE5,3=0.75** | **ΔSE5,4=0.1** |
| **{Cell1,Cell2}** | **RB6,1=2** | **RB6,2=2** | **0** | **0** |
| | **SE6,1=0.48** | **SE6,2=0.69** | | |
| | **ΔSE6,1=0.11** | **ΔSE6,2=0.07** | | |
| **{Cell1,Cell3}** | **RB7,1=2** | **0** | **RB7,3=2** | **0** |
| | **SE7,1=0.83** | | **SE7,3=3.99** | |
| | **ΔSE7,1=0.12** | | **ΔSE7,3=1.31** | |
| **{Cell1,Cell4}** | **RB8,1=2** | **0** | **0** | **RB8,4=2** |
| | **SE8,1=3.57** | | | **SE8,4=1.94** |
| | **ΔSE8,1=0.28** | | | **ΔSE8,4=0.73** |
| **{Cell2,Cell3}** | **0** | **RB9,2=2** | **RB9,3=2** | **0** |
| | | **SE9,2=0.83** | **SE9,3=0.93** | |
| | | **ΔSE9,2=0.03** | **ΔSE9,3=0.25** | |
| **{Cell2,Cell4}** | **0** | **RB10,2=2** | **0** | **RB10,4=2** |
| | | **SE10,2=2.01** | | **SE10,4=3.07** |
| | | **ΔSE10,2=0.05** | | **ΔSE10,4=0.68** |
| **{Cell3,Cell4}** | **0** | **0** | **RB11,3=2** | **RB11,4=2** |
| | | | **SE11,3=2.86** | **SE11,4=3.99** |
| | | | **ΔSE11,3=0.51** | **ΔSE11,4=0.44** |
| **{Celll}** | **RB12,1=2** | **0** | **0** | **0** |
| | **SE12,1=0.83** | | | |
| | **ΔSE12,1=0** | | | |
| **{Cell2}** | **0** | **RB13,2=2** | **0** | **0** |
| | | **SE13,2=1.52** | | |
| | | **ΔSE13,2=0** | | |
| **{Cell3}** | **0** | **0** | **RB14,3=2** | **0** |
| | | | **SE14,3=2.86** | |
| | | | **ΔSE14,3=0** | |
| **{Cell4}** | **0** | **0** | **0** | **RB15,4=2** |
| | | | | **SE15,4=0.48** |
| | | | | **ΔSE15,4=0** |

A resource allocation process in this application scenario as shown in FIG. 6 may include operations S601 to S604.

In the operation S601, the number of required resources of each divided cell is acquired.

In this operation, the total number of allocable resources of each divided cell is set to 100, and, with reference to Table 2, a sum of the estimated resource numbers of the four divided cells (i.e., the estimated total number of resources of the cell cluster) is: 16+16+16+16=64, and the estimated resource number of each divided cell is less than the total number of allocable resources of each divided cell.

In the operation S602, the number of available resources of each divided cell is 100, which satisfies that the estimated total number of resources of the cell clusters is less than or equal to the total number of available resources of each divided cell, so that all the divided cells have no resource collision, and unallocated frequency domain resources are allocated to the divided cells according to an ascending order of the IDs of the divided cells.

In the operation S603, resource locations are allocated to each cell combination with the above method according to the inter-cell interference coordination principle.

In the operation S604, the resource locations are allocated to all the users in the cells according to the number of actually allocated resources of each collision combination given in cell resource bitmap estimation, with a descending order of link spectral efficiencies taken as a resource allocation principle.

### Application Scenario Two

In this application scenario, assuming that the number N of the divided cells in the space-divided cell cluster satisfies N=4 and the number of available resource blocks N_{RB} of each divided cell satisfies N_{RB} =100, a collision pattern obtained based on such assumption is shown in Table 3:

**Table 3**

| **ID of Divided Cell in Cell Combination** | **Cell1** | **Cell2** | **Cell3** | **Cell4** |
|---|---|---|---|---|
| **{Cell1,Cell2, Cell3,Cell4}** | **RB1,1=14** | **RB1,2=4** | **RB1,3=22** | **RB1,4=12** |
| | **SE1,1=3.85** | **SE1,2=3.32** | **SE1,3=1.04** | **SE1,4=1.16** |
| | **ΔSE1,1=2.2** | **ΔSE1,2=1.63** | **ΔSE1,3=0.46** | **ΔSE1,4=0.65** |
| **{Cell1,Cell2, Cell3}** | **RB2,1=16** | **RB2,2=18** | **RB2,3=8** | **0** |
| | **SE2,1=4.14** | **SE2,2=0.83** | **SE2,3=3.32** | |
| | **ΔSE2,1=2.34** | **ΔSE2,2=0.28** | **ΔSE2,3=1.43** | |
| **{Cell1,Cell2, Cell4}** | **RB3,1=18** | **RB3,2=6** | **0** | **RB3,4=7** |
| | **SE3,1=1.94** | **SE3,2=3.99** | | **SE3,4=2.01** |
| | **ΔSE3,1=0.9** | **ΔSE3,2=0.84** | | **ΔSE3,4=0.94** |
| **{Cell2,Cell3, Cell4}** | **0** | **RB4,2=6** | **RB4,3=14** | **RB4,4=22** |
| | | **SE4,2=1.04** | **SE4,3=2.01** | **SE4,4=0.25** |
| | | **ΔSE4,2=0.14** | **ΔSE4,3=0.78** | **ΔSE4,4=0.11** |
| **{Cell1,Cell3, Cell4}** | **RB5,1=6** | **0** | **RB5,3=7** | **RB5,4=14** |
| | **SE5,1=0.48** | | **SE5,3=1.94** | **SE5,4=0.25** |
| | **ΔSE5,1=0.19** | | **ΔSE5,3=0.75** | **ΔSE5,4=0.1** |
| **{Cell1,Cell2}** | **RB6,1=18** | **RB6,2=8** | **0** | **0** |
| | **SE6,1=0.48** | **SE6,2=0.69** | | |
| | **ΔSE6,1=0.11** | **ΔSE6,2=0.07** | | |
| **{Cell1,Cell3}** | **RB7,1=16** | **0** | **RB7,3=9** | **0** |
| | **SE7,1=0.83** | | **SE7,3=3.99** | |
| | **ΔSE7,1=0.12** | | **ΔSE7,3=1.31** | |
| **{Cell1,Cell4}** | **RB8,1=20** | **0** | **0** | **RB8,4=5** |
| | **SE8,1=3.57** | | | **SE8,4=1.94** |
| | **ΔSE8,1=0.28** | | | **ΔSE8,4=0.73** |
| **{Cell2,Cell3}** | **0** | **RB9,2=11** | **RB9,3=22** | **0** |
| | | **SE9,2=0.83** | **SE9,3=0.93** | |
| | | **ΔSE9,2=0.03** | **ΔSE9,3=0.25** | |
| **{Cell2,Cell4}** | **0** | **RB10,2=15** | **0** | **RB10,4=8** |
| | | **SE10,2=2.01** | | **SE10,4=3.07** |
| | | **ΔSE10,2=0.05** | | **ΔSE10,4=0.68** |
| **{Cell3,Cell4}** | **0** | **0** | **RB11,3=5** | **RB11,4=13** |
| | | | **SE11,3=2.86** | **SE11,4=3.99** |
| | | | **ΔSE11,3=0.51** | **ΔSE11,4=0.44** |
| **{Cell1}** | **RB12,1=12** | **0** | **0** | **0** |
| | **SE12,1=0.83** | | | |
| | **ΔSE12,1=0** | | | |
| **{Cell2}** | **0** | **RB13,2=12** | **0** | **0** |
| | | **SE13,2=1.52** | | |
| | | **ΔSE13,2=0** | | |
| **{Cell3}** | **0** | **0** | **RB14,3=23** | **0** |
| | | | **SE14,3=2.86** | |
| | | | **ΔSE14,3=0** | |
| **{Cell4}** | **0** | **0** | **0** | **RB15,4=9** |
| | | | | **SE15,4=0.48** |
| | | | | **ΔSE15,4=0** |

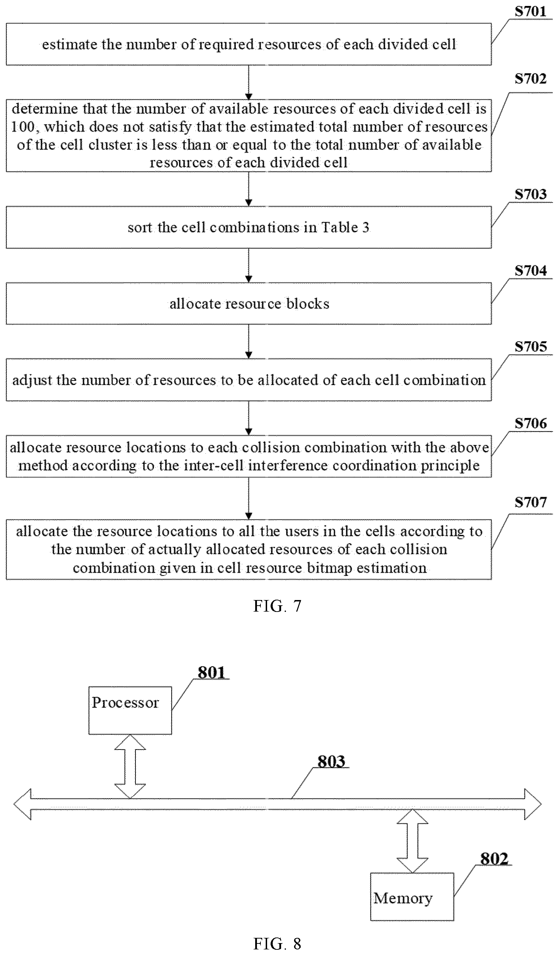

A resource allocation process in this application scenario as shown in FIG. 7 may include operations S701 to S707.

In the operation S701, the number of required resources of each divided cell is estimated.

In this operation, the total number of allocable resources of each divided cell is set to 100, and, with reference to Table 3, a sum of the estimated resource numbers of the four divided cells (i.e., the estimated total number of resources of the cell cluster) is: 120+80+110+90=400, the estimated resource numbers of Cell1 and Cell3 are greater than the total number of allocable resources of each divided cell, and the estimated number of RBs of Cell2 and Cell4 are less than the total number of allocable resources of each divided cell.

In the operation S702, it is determined that the number of available resources of each divided cell is 100, which does not satisfy that the estimated total number of resources of the cell cluster is less than or equal to the total number of available resources of each divided cell, and the operation S703 is then performed.

In the operation S703, the cell combinations in Table 3 are sorted in descending order of layer number, the cell combinations with the same layer number are sorted in ascending order of link spectral efficiency average of cell combination, and the cell combinations with the same layer number and the same link spectral efficiency average are sorted in descending order of maximum difference of total number of required resource blocks of the divided cells in the cell combinations.

The differences between the estimated resource numbers of the divided cells in each collision combination are as follows:
[18,10,12,16,8,10,7,15,11, 7, 8,12,12,23,9]

The link spectral efficiency averages of the collision combinations are:
[2.34,2.76,2.65,1.1,0.89,0.58,2.41,2.75,0.88,2.54,3.42,0.83,1.52,2.86,0.48]

The fifteen collision combinations are sorted according to the above priority orders.

The collision pattern is updated as shown in Table 4:

**Table 4**

| **Sequence number** | **ID of Divided Cell in Cell Combination** | **Cell1** | **Cell2** | **Cell3** | **Cell4** |
|---|---|---|---|---|---|
| **Combination 1** | **{Cell1,Cell2, Cell3,Cell4}** | **RB1,1=14** | **RB1,2=4** | **RB1,3=22** | **RB1,4=12** |
| | | **SE1,1=3.85** | **SE1,2=3.32** | **SE1,3=1.04** | **SE1,4=1.16** |
| | | **ΔSE1,1=2.2** | **ΔSE1,2=1.63** | **ΔSE1,3=0.46** | **ΔSE1,4=0.65** |
| **Combination 2** | **{Cell1,Cell2, Cell3}** | **RB2,1=16** | **RB2,2=18** | **RB2,3=8** | **0** |
| | | **SE2,1=4.14** | **SE2,2=0.83** | **SE2,3=3.32** | |
| | | **ΔSE2,1=2.34** | **ΔSE2,2=0.28** | **ΔSE2,3=1.43** | |
| **Combination 3** | **{Cell1,Cell2, Cell4}** | **RB3,1=18** | **RB3,2=6** | **0** | **RB3,4=7** |
| | | **SE3,1=1.94** | **SE3,2=3.99** | | **SE3,4=2.01** |
| | | **ΔSE3,1=0.9** | **ΔSE3,2=0.84** | | **ΔSE3,4=0.94** |
| **Combination 4** | **{Cell2,Cell3, Cell4}** | **0** | **RB4,2=6** | **RB4,3=14** | **RB4,4=22** |
| | | | **SE4,2=1.04** | **SE4,3=2.01** | **SE4,4=0.25** |
| | | | **ΔSE4,2=0.14** | **ΔSE4,3=0.78** | **ΔSE4,4=0.11** |
| **Combination 5** | **{Cell1,Cell3, Cell4}** | **RB5,1=6** | **0** | **RB5,3=7** | **RB5,4=14** |
| | | **SE5,1=0.48** | | **SE5,3=1.94** | **SE5,4=0.25** |
| | | **ΔSE5,1=0.19** | | **ΔSE5,3=0.75** | **ΔSE5,4=0.1** |
| **Combination 6** | **{Cell3,Cell4}** | **0** | **0** | **RB11,3=5** | **RB11,4=13** |
| | | | | **SE11,3=2.86** | **SE11,4=3.99** |
| | | | | **ΔSE11,3=0.51** | **ΔSE11,4=0.44** |
| **Combination 7** | **{Cell1,Cell4}** | **RB8,1=20** | **0** | **0** | **RB8,4=5** |
| | | **SE8,1=3.57** | | | **SE8,4=1.94** |
| | | **ΔSE8,1=0.28** | | | **ΔSE8,4=0.73** |
| **Combination 8** | **{Cell2,Cell4}** | **0** | **RB10,2=15** | **0** | **RB10,4=8** |
| | | | **SE10,2=2.01** | | **SE10,4=3.07** |
| | | | **ΔSE10,2=0.05** | | **ΔSE10,4=0.68** |
| **Combination 9** | **{Cell1,Cell3}** | **RB7,1=16** | **0** | **RB7,3=9** | **0** |
| | | **SE7,1=0.83** | | **SE7,3=3.99** | |
| | | **ΔSE7,1=0.12** | | **ΔSE7,3=1.31** | |
| **Combination 10** | **{Cell2,Cell3}** | **0** | **RB9,2=11** | **RB9,3=22** | **0** |
| | | | **SE9,2=0.83** | **SE9,3=0.93** | |
| | | | **ΔSE9,2=0.03** | **ΔSE9,3=0.25** | |
| **Combination 11** | **{Cell1,Cell2}** | **RB6,1=18** | **RB6,2=8** | **0** | **0** |
| | | **SE6,1=0.48** | **SE6,2=0.69** | | |
| | | **ΔSE6,1=0.11** | **ΔSE6,2=0.07** | | |
| **Combination 12** | **{Cell3}** | **0** | **0** | **RB14,3=23** | **0** |
| | | | | **SE14,3=2.86** | |
| | | | | **ΔSE14,3=0** | |
| **Combination** | **{Cell2}** | **0** | **RB13,2=12** | **0** | **0** |
| **13** | | | **SE13,2=1.52** | | |
| | | | **ΔSE13,2=0** | | |
| **Combination 14** | **{Cell1}** | **RB12,1=12** | **0** | **0** | **0** |
| | | **SE12,1=0.83** | | | |
| | | **ΔSE12,1=0** | | | |
| **Combination 15** | **{Cell4}** | **0** | **0** | **0** | **RB15,4=9** |
| | | | | | **SE15,4=0.48** |
| | | | | | **ΔSE15,4=0** |

In the operation S704, resource block allocation is performed and includes: for the Combination 1, there is no collision combination including the Combination 1, the number of allocated resources is min{14,4,22,12}=4, and the number of remaining unallocated resources (i.e., resource blocks) is {10,0,18,8}. For the Combination 2, there is one collision combination including the Combination 2, i.e., the Combination 1, then the number of resources to be allocated is {16,18,8,0}+{10,0,18,8}={26,18,26,8}; and since the Combination 2 cannot collide with Cell4, the number of resources to be allocated is {26,18,26,0};
The number of allocated resources of the Combination 2 is min{26,18,26}=18, and the allocation order is the number of unallocated resources of the Combination 1 and the number of unallocated resources of the Combination 2;
After the allocation is completed, the number of unallocated resources of the Combination 1 is {0,0,0,8}, and the number of unallocated resources of the Combination 2 is {8,0,8,0}. The link spectral efficiency average of the Combination 1 is unchanged, and the reduced link spectral efficiency average of the Combination 1 is unchanged. The link spectral efficiency average and the reduced link spectral efficiency average of the Combination 2 are updated according to the number of the resources of the Combination 1 which are actually allocated to each divided cell in the Combination 2 and the number of the resources of the Combination 2 which are actually allocated to each divided cell in the Combination 2;
All the collision combinations are subjected to the above allocation process to complete allocation of a number of resources.

In the operation S705, the number of resources to be allocated of each cell combination is adjusted.

The divided cells Cell2 and Cell4 have extra resources after the allocation is performed according to the estimated resource numbers, the collision combinations with higher reduced link spectral efficiencies are preferentially split to take out the extra resources for frequency division scheduling, and the information of the corresponding combinations is updated.

In the operation S706, resource locations are allocated to each collision combination with the above method according to an inter-cell interference coordination principle.

In the operation S707, the resource locations are allocated to all the users in the cells according to the number of actually allocated resources of each collision combination given in cell resource bitmap estimation, with a descending order of link spectral efficiencies taken as a resource allocation principle.

### Embodiment Five

The embodiment further provides a communication apparatus, which may be a base station or other communication apparatuses. As shown in FIG. 8, the communication device includes a processor 801, a memory 802 and a communication bus 803.

The communication bus 803 is configured to enable communication and connection between the processor 801 and the memory 802.

In an example, the processor 801 may be configured to execute one or more computer programs stored in the memory 802 to implement the resource allocation method for an intelligent space-divided cell cluster according to each of the above embodiments.

The embodiment further provides a computer-readable storage medium, which includes volatile/nonvolatile and removable/non-removable media used in any method or technology for storing information (such as computer-readable instructions, data structures, computer program modules or other data). The computer-readable storage medium includes, but is not limited to, a Random Access Memory (RAM), a Read-Only Memory (ROM), an Electrically Erasable Programmable Read-Only Memory (EEPROM), a flash memory or other storage technology, a Compact Disc Read-Only Memory (CD-ROM), a Digital Video Disk (DVD) or other optical discs, a magnetic cassette, a magnetic tape, a magnetic disk or other magnetic storage devices, or any other medium which can be used to store the desired information and can be accessed by a computer.

In an example, the computer-readable storage medium provided by this embodiment may be configured to store one or more computer programs executable by one or more processors to implement the resource allocation method for an intelligent space-divided cell cluster according to each of the above embodiments.

The embodiment further provides a computer program (or computer software), which may be distributed on a computer-readable medium and executed by a computing device to implement at least one operation of the resource allocation method for an intelligent space-divided cell cluster according to each of the above embodiments. In some cases, at least one operation illustrated or described herein may be executed in an order different from that described in the above embodiments.

The embodiment further provides a computer program product, including a computer-readable device having the above computer program stored therein. In the embodiment, the computer-readable device may include the above computer-readable storage medium.

Apparently, it should be understood by those of ordinary skill in the art that the functional modules/units in all or some of the operations, the systems and the devices in the method disclosed above may be implemented as software (which may be implemented as computer program codes executable by a computing device), firmware, hardware, or suitable combinations thereof. If implemented as hardware, the division between the functional modules/units described above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit.

In addition, it is well known by those of ordinary skill in the art that communication media generally include computer-readable instructions, data structures, computer program modules or other data in a modulated data signal, such as a carrier wave or other transmission mechanism, and can include any information delivery media. Therefore, the present disclosure is not limited to any specific combination of hardware and software.

The above is a further detailed description of the embodiments of the present disclosure in conjunction with the specific implementations, but the specific implementations of the present disclosure are not limited to the above description. Several simple deductions or substitutions can be made by those of ordinary skill in the art without departing from the concept of the present disclosure, and should be considered to fall within the scope of the present disclosure.

## Claims

1. A resource allocation method for an intelligent space-divided cell cluster, comprising:
for each divided cell in a space-divided cell cluster, determining (S101) users belonging to each cell combination of the divided cell; wherein cell combinations of the divided cell comprise a non-collision combination and collision combinations, the collision combinations comprise various combinations of the divided cell and other divided cells in the space-divided cell cluster, and the non-collision combination comprises the divided cell alone;
obtaining (S102) an estimated total number of required resource blocks of the space-divided cell cluster according to an estimated number of required resource blocks of the users belonging to each cell combination of each divided cell; and
allocating (S103) resource blocks to the users in each cell combination of divided cells in the space-divided cell cluster according to a number of available resource blocks of each divided cell and the estimated total number of required resource blocks of the space-divided cell cluster,
wherein the intelligent space-divided cell cluster are cells covered by a base station and divided into a plurality of divided cells using massive Multiple-Input and Multiple-Output, MIMO, and wherein each divided cell in the space-divided cell cluster multiplexes a same time-frequency resource and is independently scheduled.

2. The resource allocation method for an intelligent space-divided cell cluster of claim 1, wherein, determining (S101) the users belonging to each cell combination of the divided cell comprises:
determining the users belonging to each cell combination of the divided cell according to an ascending order of interference of each cell combination of the divided cell to the divided cell.

3. The resource allocation method for an intelligent space-divided cell cluster of claim 2, wherein, determining the users belonging to each cell combination of the divided cell according to the ascending order of interference of each cell combination of the divided cell to the divided cell comprises:
sorting (S201) the other divided cells in the space-divided cell cluster which cause interference to the divided cell in ascending order of interference, and combining (S201) the divided cell and the other divided cells which cause interference thereto according to the ascending order of interference to obtain collision combinations in ascending order of interference; and
sequentially obtaining (S202) reduced link spectral efficiencies of a user in the collision combinations of the divided cell, determining (S202) that the user belongs to a previous collision combination relative to a collision combination corresponding to a reduced link spectral efficiency when the reduced link spectral efficiency is greater than a preset reduced link spectral efficiency threshold, and determining that the user belongs to a non-collision combination where the divided cell does not collide with the other divided cells in the space-divided cell cluster, and the user is a user that does not support the collision combination when the collision combination corresponding to the reduced link spectral efficiency is a first collision combination; and
the reduced link spectral efficiency is a difference between a link spectral efficiency of the user in the divided cell without interference and a link spectral efficiency of the user in a collision combination corresponding to the divided cell.

4. The resource allocation method for an intelligent space-divided cell cluster of claim 1, wherein allocating (S103) the resource blocks to the users in each cell combination of the divided cells in the space-divided cell cluster according to the number of available resource blocks of each divided cell and the estimated total number of required resource blocks of the space-divided cell cluster comprises:
when the estimated total number of required resource blocks of the space-divided cell cluster is less than or equal to a minimum of numbers of available resource blocks of the divided cells, sequentially allocating the resource blocks to the divided cells according to identifiers, IDs, of the divided cells, and allocating the resource blocks to the users in each divided cell.

5. The resource allocation method for an intelligent space-divided cell cluster of any one of claims 1 to 4, wherein allocating (S103) the resource blocks to the users in each cell combination of the divided cells in the space-divided cell cluster according to the number of available resource blocks of each divided cell and the estimated total number of required resource blocks of the space-divided cell cluster comprises:
when the estimated total number of required resource blocks of the space-divided cell cluster is greater than the minimum of the numbers of available resource blocks of the divided cells, sequentially allocating the resource blocks to a divided cell in each cell combination according to a descending order of layer numbers of cell combinations; and
a layer number of a cell combination is a number of divided cells included in the cell combination, and a layer number of a non-collision combination where a divided cell does not collide with other divided cells in the space-divided cell cluster is 1.

6. The resource allocation method for an intelligent space-divided cell cluster of claim 5, wherein sequentially allocating the resource blocks to the divided cell in each cell combination according to the descending order of the layer numbers of the cell combinations comprises:
sorting the cell combinations according to the following sorting rule;
sorting the cell combinations in descending order of layer number, sorting the cell combinations with a same layer number in ascending order of link spectral efficiency average of cell combination, and sorting the cell combinations with a same layer number and a same link spectral efficiency average in descending order of maximum difference of total numbers of required resource blocks of divided cells in the cell combinations; and
sequentially allocating the resource blocks to divided cells in each cell combination according to an order of the sorted cell combinations.

7. The resource allocation method for an intelligent space-divided cell cluster of claim 6, wherein sequentially allocating the resource blocks to the divided cells in each cell combination according to the order of the sorted cell combinations comprises:
when the resource blocks are allocated to a current cell combination, obtaining (S301) all cell combination parent set comprising the current cell combination, with each cell combination in the cell combination parent set comprising all divided cells in the current cell combination;
obtaining (S302) a number of required resource blocks of each divided cell in the current cell combination and a number of underallocated resource blocks of each divided cell in each cell combination in the cell combination parent set, and adding (S302) the number of required resource blocks of each divided cell and the number of underallocated resource blocks to obtain a number of to-be-allocated resource blocks of each divided cell of the current cell combination; and
taking (S303) a minimum of numbers of to-be-allocated resource blocks of all the divided cells of the current cell combination as a current resource block allocation number, and sequentially allocating (S303) the resource blocks to divided cells in a corresponding cell combination according to an order of the current cell combination and cell combinations in the cell combination parent set.

8. The resource allocation method for an intelligent space-divided cell cluster of claim 5, wherein sequentially allocating the resource blocks to the divided cell in each cell combination according to the descending order of the layer numbers of the cell combinations comprises:
when a divided cell is determined to be a resource surplus divided cell with extra available resource blocks, selecting at least one target collision combination from collision combinations of the resource surplus divided cell, separating the resource surplus divided cell from the at least one selected target collision combination, and allocating the resource blocks to the divided cell according to a number of extra available resource blocks of the resource surplus divided cell.

9. The resource allocation method for an intelligent space-divided cell cluster of claim 8, wherein selecting the at least one target collision combination from the collision combinations of the resource surplus divided cell comprises:
selecting the at least one collision combination from the collision combinations of the resource surplus divided cell according to the number of extra available resource blocks of the resource surplus divided cell and a descending order of reduced link spectral efficiencies of the collision combinations.

10. A communication apparatus, comprising a processor (801), a memory (802) and a communication bus (803);
the communication bus (803) is configured to connect the processor (801) with the memory (802); and
the processor (801) is configured to execute a computer program stored in the memory (802) to implement the resource allocation method for an intelligent space-divided cell cluster of any one of claims 1 to 9.

11. A computer-readable storage medium having one or more computer programs stored thereon, wherein when the one or more computer programs are executed by one or more processors of a computer, cause the computer to carry out the resource allocation method for an intelligent space-divided cell cluster of any one of claims 1 to 9.

## Patentansprüche

1. Ressourcenzuteilungsverfahren für einen intelligenten raumaufgeteilten Zellcluster, umfassend:
für jede Teilzelle in einem raumaufgeteilten Zellcluster Bestimmen (S101) von Benutzern, die zu jeder Zellkombination der Teilzelle gehören; wobei Zellkombinationen der Teilzelle eine Nicht-Kollisionskombination und Kollisionskombinationen umfassen, die Kollisionskombinationen verschiedene Kombinationen der Teilzelle und anderer Teilzellen in dem raumaufgeteilten Zellcluster umfassen und die Nicht-Kollisionskombination die Teilzelle allein umfasst;
Ermitteln (S102) einer geschätzten Gesamtzahl erforderlicher Ressourcenblöcke des raumaufgeteilten Zellclusters gemäß einer geschätzten Anzahl erforderlicher Ressourcenblöcke der zu jeder Zellkombination jeder Teilzelle gehörenden Benutzer; und
Zuteilen (S103) von Ressourcenblöcken an die Benutzer in jeder Zellkombination von Teilzellen in dem raumaufgeteilten Zellcluster entsprechend einer Anzahl verfügbarer Ressourcenblöcke jeder Teilzelle und der geschätzten Gesamtzahl erforderlicher Ressourcenblöcke des raumaufgeteilten Zellclusters,
wobei der intelligente raumaufgeteilte Zellcluster Zellen umfasst, die von einer Basisstation abgedeckt und mittels massivem Multiple-Input and Multiple-Output (MIMO) in mehrere Teilzellen unterteilt sind, und wobei jede Teilzelle in dem raumaufgeteilten Zellcluster dieselbe Zeit-Frequenz-Ressource multiplexiert und unabhängig geplant wird.

2. Ressourcenzuteilungsverfahren für einen intelligenten raumaufgeteilten Zellcluster nach Anspruch 1, wobei das Bestimmen (S101) der zu jeder Zellkombination der Teilzelle gehörenden Benutzer Folgendes umfasst:
Bestimmen der zu jeder Zellkombination der Teilzelle gehörenden Benutzer entsprechend einer aufsteigenden Reihenfolge einer Störung jeder Zellkombination der Teilzelle auf die Teilzelle.

3. Ressourcenzuteilungsverfahren für einen intelligenten raumaufgeteilten Zellcluster nach Anspruch 2, wobei das Bestimmen der zu jeder Zellkombination der Teilzelle gehörenden Benutzer gemäß der aufsteigenden Reihenfolge der Störung jeder Zellkombination der Teilzelle auf die Teilzelle Folgendes umfasst:
Sortieren (S201) der anderen Teilzellen in dem raumaufgeteilten Zellcluster, die eine Störung auf die Teilzelle verursachen, in aufsteigender Reihenfolge der Störung und Kombinieren (S201) der Teilzelle und der anderen Teilzellen, die die Störung verursachen, entsprechend der aufsteigenden Reihenfolge der Störung, um Kollisionskombinationen in aufsteigender Reihenfolge der Störung zu erhalten; und
sequentielles Ermitteln (S202) reduzierter Link-Spektraleffizienzen eines Benutzers in den Kollisionskombinationen der Teilzelle, Bestimmen (S202), dass der Benutzer zu einer vorhergehenden Kollisionskombination gegenüber einer Kollisionskombination gehört, die einer reduzierten Link-Spektraleffizienz entspricht, wenn die reduzierte Link-Spektraleffizienz größer als ein voreingestellter reduzierter Link-Spektraleffizienz-Schwellenwert ist, und Bestimmen, dass der Benutzer zu einer Nicht-Kollisionskombination gehört, bei der die Teilzelle nicht mit den anderen Teilzellen in dem raumaufgeteilten Zellcluster kollidiert, und dass der Benutzer ein Benutzer ist, der die Kollisionskombination nicht unterstützt, wenn die Kollisionskombination, die der reduzierten Link-Spektraleffizienz entspricht, eine erste Kollisionskombination ist; und
wobei die reduzierte Link-Spektraleffizienz eine Differenz zwischen einer Link-Spektraleffizienz des Benutzers in der Teilzelle ohne Störung und einer Link-Spektraleffizienz des Benutzers in einer Kollisionskombination ist, die der Teilzelle entspricht.

4. Ressourcenzuteilungsverfahren für einen intelligenten raumaufgeteilten Zellcluster nach Anspruch 1, wobei das Zuteilen (S103) der Ressourcenblöcke an die Benutzer in jeder Zellkombination der Teilzellen in dem raumaufgeteilten Zellcluster entsprechend der Anzahl verfügbarer Ressourcenblöcke jeder Teilzelle und der geschätzten Gesamtzahl erforderlicher Ressourcenblöcke des raumaufgeteilten Zellclusters Folgendes umfasst:
wenn die geschätzte Gesamtzahl erforderlicher Ressourcenblöcke des raumaufgeteilten Zellclusters kleiner als oder gleich einem Minimum von Anzahlen verfügbarer Ressourcenblöcke der Teilzellen ist, sequentielles Zuteilen der Ressourcenblöcke an die Teilzellen entsprechend Kennungen (IDs) der Teilzellen und Zuteilen der Ressourcenblöcke an die Benutzer in jeder Teilzelle.

5. Ressourcenzuteilungsverfahren für einen intelligenten raumaufgeteilten Zellcluster nach einem der Ansprüche 1 bis 4, wobei das Zuteilen (S103) der Ressourcenblöcke an die Benutzer in jeder Zellkombination der Teilzellen in dem raumaufgeteilten Zellcluster entsprechend der Anzahl verfügbarer Ressourcenblöcke jeder Teilzelle und der geschätzten Gesamtzahl erforderlicher Ressourcenblöcke des raumaufgeteilten Zellclusters Folgendes umfasst:
wenn die geschätzte Gesamtzahl erforderlicher Ressourcenblöcke des raumaufgeteilten Zellclusters größer als das Minimum der Anzahlen verfügbarer Ressourcenblöcke der Teilzellen ist, sequentielles Zuteilen der Ressourcenblöcke an eine Teilzelle in jeder Zellkombination entsprechend einer absteigenden Reihenfolge von Schichtzahlen von Zellkombinationen; und
wobei eine Schichtzahl einer Zellkombination eine Anzahl von Teilzellen ist, die in der Zellkombination enthalten sind, und eine Schichtzahl einer Nicht-Kollisionskombination, bei der eine Teilzelle nicht mit anderen Teilzellen in dem raumaufgeteilten Zellcluster kollidiert, 1 ist.

6. Ressourcenzuteilungsverfahren für einen intelligenten raumaufgeteilten Zellcluster nach Anspruch 5, wobei das sequentielle Zuteilen der Ressourcenblöcke an die Teilzelle in jeder Zellkombination entsprechend der absteigenden Reihenfolge der Schichtzahlen der Zellkombinationen Folgendes umfasst:
Sortieren der Zellkombinationen gemäß der folgenden Sortierregel;
Sortieren der Zellkombinationen in absteigender Reihenfolge der Schichtzahl, Sortieren der Zellkombinationen mit derselben Schichtzahl in aufsteigender Reihenfolge eines Link-Spektraleffizienzmittels der Zellkombination und Sortieren der Zellkombinationen mit derselben Schichtzahl und demselben Link-Spektraleffizienzmittel in absteigender Reihenfolge einer maximalen Differenz von Gesamtzahlen erforderlicher Ressourcenblöcke von Teilzellen in den Zellkombinationen; und
sequentielles Zuteilen der Ressourcenblöcke an Teilzellen in jeder Zellkombination entsprechend einer Reihenfolge der sortierten Zellkombinationen.

7. Ressourcenzuteilungsverfahren für einen intelligenten raumaufgeteilten Zellcluster nach Anspruch 6, wobei das sequentielle Zuteilen der Ressourcenblöcke an die Teilzellen in jeder Zellkombination entsprechend der Reihenfolge der sortierten Zellkombinationen Folgendes umfasst:
wenn die Ressourcenblöcke einer aktuellen Zellkombination zugeteilt werden, Ermitteln (S301) einer gesamten Zellkombinations-Elternmenge, die die aktuelle Zellkombination umfasst, wobei jede Zellkombination in der Zellkombinations-Elternmenge alle Teilzellen in der aktuellen Zellkombination umfasst;
Ermitteln (S302) einer Anzahl erforderlicher Ressourcenblöcke jeder Teilzelle in der aktuellen Zellkombination und einer Anzahl unterallokierter Ressourcenblöcke jeder Teilzelle in jeder Zellkombination in der Zellkombinations-Elternmenge und Addieren (S302) der Anzahl erforderlicher Ressourcenblöcke jeder Teilzelle und der Anzahl der unterallokierten Ressourcenblöcke, um eine Anzahl zuzuteilender Ressourcenblöcke jeder Teilzelle der aktuellen Zellkombination zu erhalten; und
Bestimmen (S303) eines Minimums von Anzahlen zuzuteilender Ressourcenblöcke aller Teilzellen der aktuellen Zellkombination als aktuelle Ressourcenblock-Zuteilungszahl und sequentielles Zuteilen (S303) der Ressourcenblöcke an Teilzellen in einer entsprechenden Zellkombination entsprechend einer Reihenfolge der aktuellen Zellkombination und Zellkombinationen in der Zellkombinations-Elternmenge.

8. Ressourcenzuteilungsverfahren für einen intelligenten raumaufgeteilten Zellcluster nach Anspruch 5, wobei das sequentielle Zuteilen der Ressourcenblöcke an die Teilzelle in jeder Zellkombination entsprechend der absteigenden Reihenfolge der Schichtzahlen der Zellkombinationen Folgendes umfasst:
wenn bestimmt wird, dass eine Teilzelle eine ressourcenüberschüssige Teilzelle mit zusätzlichen verfügbaren Ressourcenblöcken ist, Auswählen von mindestens einer Zielkollisionskombination aus Kollisionskombinationen der ressourcenüberschüssigen Teilzelle, Trennen der ressourcenüberschüssigen Teilzelle von der mindestens einen ausgewählten Zielkollisionskombination und Zuteilen der Ressourcenblöcke an die Teilzelle entsprechend einer Anzahl zusätzlicher verfügbarer Ressourcenblöcke der ressourcenüberschüssigen Teilzelle.

9. Ressourcenzuteilungsverfahren für einen intelligenten raumaufgeteilten Zellcluster nach Anspruch 8, wobei das Auswählen der mindestens einen Zielkollisionskombination aus den Kollisionskombinationen der ressourcenüberschüssigen Teilzelle Folgendes umfasst:
Auswählen der mindestens einen Kollisionskombination aus den Kollisionskombinationen der ressourcenüberschüssigen Teilzelle entsprechend der Anzahl zusätzlicher verfügbarer Ressourcenblöcke der ressourcenüberschüssigen Teilzelle und einer absteigenden Reihenfolge reduzierter Link-Spektraleffizienzen der Kollisionskombinationen.

10. Kommunikationsvorrichtung, umfassend einen Prozessor (801), einen Speicher (802) und einen Kommunikationsbus (803);
wobei der Kommunikationsbus (803) dazu eingerichtet ist, den Prozessor (801) mit dem Speicher (802) zu verbinden; und
wobei der Prozessor (801) dazu eingerichtet ist, ein im Speicher (802) gespeichertes Computerprogramm auszuführen, um das Ressourcenzuteilungsverfahren für einen intelligenten raumaufgeteilten Zellcluster nach einem der Ansprüche 1 bis 9 zu implementieren.

11. Computerlesbares Speichermedium, auf dem ein oder mehrere Computerprogramme gespeichert sind, die, wenn das eine oder die mehreren Computerprogramme von einem oder mehreren Prozessoren eines Computers ausgeführt werden, den Computer veranlassen, das Ressourcenzuteilungsverfahren für einen intelligenten raumaufgeteilten Zellcluster nach einem der Ansprüche 1 bis 9 auszuführen.

## Revendications

1. Procédé d'allocation de ressources pour une grappe de cellules intelligente à division spatiale, comprenant :
pour chaque cellule divisée dans une grappe de cellules à division spatiale, détermination (S101) d'utilisateurs appartenant à chaque combinaison de cellules de la cellule divisée ;
les combinaisons de cellules de la cellule divisée comprenant une combinaison non en collision et des combinaisons en collision, les combinaisons en collision comprenant différentes combinaisons de la cellule divisée et d'autres cellules divisées dans la grappe de cellules à division spatiale, et la combinaison non en collision comprenant la cellule divisée seule ;
obtention (S102) d'un nombre total estimé de blocs de ressources requis de la grappe de cellules à division spatiale en fonction d'un nombre estimé de blocs de ressources requis des utilisateurs appartenant à chaque combinaison de cellules de chaque cellule divisée ; et
allocation (S103) de blocs de ressources aux utilisateurs dans chaque combinaison de cellules de cellules divisées dans la grappe de cellules à division spatiale en fonction d'un nombre de blocs de ressources disponibles de chaque cellule divisée et du nombre total estimé de blocs de ressources requis de la grappe de cellules à division spatiale,
la grappe de cellules intelligente à division spatiale étant des cellules couvertes par une station de base et divisées en une pluralité de cellules divisées à l'aide d'un Multiple-Input Multiple-Output massif (MIMO), et chaque cellule divisée dans la grappe de cellules à division spatiale multiplexant une même ressource temps-fréquence et étant planifiée de manière indépendante.

2. Procédé d'allocation de ressources pour une grappe de cellules intelligente à division spatiale selon la revendication 1, dans lequel la détermination (S101) des utilisateurs appartenant à chaque combinaison de cellules de la cellule divisée comprend :
la détermination des utilisateurs appartenant à chaque combinaison de cellules de la cellule divisée selon un ordre croissant d'interférence de chaque combinaison de cellules de la cellule divisée sur la cellule divisée.

3. Procédé d'allocation de ressources pour une grappe de cellules intelligente à division spatiale selon la revendication 2, dans lequel la détermination des utilisateurs appartenant à chaque combinaison de cellules de la cellule divisée selon l'ordre croissant d'interférence de chaque combinaison de cellules de la cellule divisée sur la cellule divisée comprend :
un tri (S201) des autres cellules divisées dans la grappe de cellules à division spatiale qui provoquent une interférence sur la cellule divisée selon un ordre croissant d'interférence, et une combinaison (S201) de la cellule divisée et des autres cellules divisées qui provoquent l'interférence en fonction de l'ordre croissant d'interférence afin d'obtenir des combinaisons en collision selon un ordre croissant d'interférence ; et
une obtention séquentielle (S202) d'efficacités spectrales de liaison réduites d'un utilisateur dans les combinaisons en collision de la cellule divisée, une détermination (S202) que l'utilisateur appartient à une combinaison en collision précédente par rapport à une combinaison en collision correspondant à une efficacité spectrale de liaison réduite lorsque l'efficacité spectrale de liaison réduite est supérieure à un seuil prédéfini d'efficacité spectrale de liaison réduite, et une détermination que l'utilisateur appartient à une combinaison non en collision où la cellule divisée n'est pas en collision avec les autres cellules divisées dans la grappe de cellules à division spatiale, et que l'utilisateur est un utilisateur qui ne prend pas en charge la combinaison en collision lorsque la combinaison en collision correspondant à l'efficacité spectrale de liaison réduite est une première combinaison en collision ; et
l'efficacité spectrale de liaison réduite étant une différence entre une efficacité spectrale de liaison de l'utilisateur dans la cellule divisée sans interférence et une efficacité spectrale de liaison de l'utilisateur dans une combinaison en collision correspondant à la cellule divisée.

4. Procédé d'allocation de ressources pour une grappe de cellules intelligente à division spatiale selon la revendication 1, dans lequel l'allocation (S103) des blocs de ressources aux utilisateurs dans chaque combinaison de cellules des cellules divisées dans la grappe de cellules à division spatiale en fonction du nombre de blocs de ressources disponibles de chaque cellule divisée et du nombre total estimé de blocs de ressources requis de la grappe de cellules à division spatiale comprend :
lorsque le nombre total estimé de blocs de ressources requis de la grappe de cellules à division spatiale est inférieur ou égal à un minimum de nombres de blocs de ressources disponibles des cellules divisées, une allocation séquentielle des blocs de ressources aux cellules divisées selon des identifiants, ID, des cellules divisées, et une allocation des blocs de ressources aux utilisateurs dans chaque cellule divisée.

5. Procédé d'allocation de ressources pour une grappe de cellules intelligente à division spatiale selon l'une quelconque des revendications 1 à 4, dans lequel l'allocation (S103) des blocs de ressources aux utilisateurs dans chaque combinaison de cellules des cellules divisées dans la grappe de cellules à division spatiale en fonction du nombre de blocs de ressources disponibles de chaque cellule divisée et du nombre total estimé de blocs de ressources requis de la grappe de cellules à division spatiale comprend :
lorsque le nombre total estimé de blocs de ressources requis de la grappe de cellules à division spatiale est supérieur au minimum des nombres de blocs de ressources disponibles des cellules divisées, une allocation séquentielle des blocs de ressources à une cellule divisée dans chaque combinaison de cellules selon un ordre décroissant de numéros de couche de combinaisons de cellules ; et
un numéro de couche d'une combinaison de cellules étant un nombre de cellules divisées incluses dans la combinaison de cellules, et un numéro de couche d'une combinaison non en collision dans laquelle une cellule divisée n'est pas en collision avec d'autres cellules divisées dans la grappe de cellules à division spatiale étant égal à 1.

6. Procédé d'allocation de ressources pour une grappe de cellules intelligente à division spatiale selon la revendication 5, dans lequel l'allocation séquentielle des blocs de ressources à la cellule divisée dans chaque combinaison de cellules selon l'ordre décroissant des numéros de couche des combinaisons de cellules comprend :
un tri des combinaisons de cellules selon la règle de tri suivante ;
un tri des combinaisons de cellules dans un ordre décroissant de numéro de couche, un tri des combinaisons de cellules ayant un même numéro de couche dans un ordre croissant d'une moyenne d'efficacité spectrale de liaison de combinaison de cellules, et un tri des combinaisons de cellules ayant un même numéro de couche et une même moyenne d'efficacité spectrale de liaison dans un ordre décroissant d'une différence maximale de nombres totaux de blocs de ressources requis des cellules divisées dans les combinaisons de cellules ; et
une allocation séquentielle des blocs de ressources aux cellules divisées dans chaque combinaison de cellules selon un ordre des combinaisons de cellules triées.

7. Procédé d'allocation de ressources pour une grappe de cellules intelligente à division spatiale selon la revendication 6, dans lequel l'allocation séquentielle des blocs de ressources aux cellules divisées dans chaque combinaison de cellules selon l'ordre des combinaisons de cellules triées comprend :
lorsque les blocs de ressources sont alloués à une combinaison de cellules courante, une obtention (S301) de tout ensemble parent de combinaisons de cellules comprenant la combinaison de cellules courante, chaque combinaison de cellules dans l'ensemble parent de combinaisons de cellules comprenant toutes les cellules divisées dans la combinaison de cellules courante ;
une obtention (S302) d'un nombre de blocs de ressources requis de chaque cellule divisée dans la combinaison de cellules courante et d'un nombre de blocs de ressources sous-alloués de chaque cellule divisée dans chaque combinaison de cellules dans l'ensemble parent de combinaisons de cellules, et une addition (S302) du nombre de blocs de ressources requis de chaque cellule divisée et du nombre de blocs de ressources sous-alloués afin d'obtenir un nombre de blocs de ressources à allouer de chaque cellule divisée de la combinaison de cellules courante ; et
une prise (S303) d'un minimum de nombres de blocs de ressources à allouer de toutes les cellules divisées de la combinaison de cellules courante comme nombre courant d'allocation de blocs de ressources, et une allocation séquentielle (S303) des blocs de ressources aux cellules divisées dans une combinaison de cellules correspondante selon un ordre de la combinaison de cellules courante et des combinaisons de cellules dans l'ensemble parent de combinaisons de cellules.

8. Procédé d'allocation de ressources pour une grappe de cellules intelligente à division spatiale selon la revendication 5, dans lequel l'allocation séquentielle des blocs de ressources à la cellule divisée dans chaque combinaison de cellules selon l'ordre décroissant des numéros de couche des combinaisons de cellules comprend :
lorsqu'une cellule divisée est déterminée comme étant une cellule divisée en surplus de ressources avec des blocs de ressources disponibles supplémentaires, une sélection d'au moins une combinaison en collision cible parmi des combinaisons en collision de la cellule divisée en surplus de ressources, une séparation de la cellule divisée en surplus de ressources de la au moins une combinaison en collision cible sélectionnée, et une allocation des blocs de ressources à la cellule divisée en fonction d'un nombre de blocs de ressources disponibles supplémentaires de la cellule divisée en surplus de ressources.

9. Procédé d'allocation de ressources pour une grappe de cellules intelligente à division spatiale selon la revendication 8, dans lequel la sélection de la au moins une combinaison en collision cible parmi les combinaisons en collision de la cellule divisée en surplus de ressources comprend :
une sélection de la au moins une combinaison en collision parmi les combinaisons en collision de la cellule divisée en surplus de ressources en fonction du nombre de blocs de ressources disponibles supplémentaires de la cellule divisée en surplus de ressources et d'un ordre décroissant d'efficacités spectrales de liaison réduites des combinaisons en collision.

10. Appareil de communication, comprenant un processeur (801), une mémoire (802) et un bus de communication (803) ;
le bus de communication (803) étant configuré pour relier le processeur (801) à la mémoire (802) ; et
le processeur (801) étant configuré pour exécuter un programme d'ordinateur stocké dans la mémoire (802) afin de mettre en œuvre le procédé d'allocation de ressources pour une grappe de cellules intelligente à division spatiale selon l'une quelconque des revendications 1 à 9.

11. Support de stockage lisible par ordinateur comportant un ou plusieurs programmes d'ordinateur qui y sont stockés, dans lequel, lorsque le ou les programmes d'ordinateur sont exécutés par un ou plusieurs processeurs d'un ordinateur, ils amènent l'ordinateur à réaliser le procédé d'allocation de ressources pour une grappe de cellules intelligente à division spatiale selon l'une quelconque des revendications 1 à 9.
